# EUROPEAN PATENT SPECIFICATION

(11) **EP 3 339 760 B1**
(45) Date of publication and mention of the grant of the patent: **21.04.2021**
(21) Application number: 16397540.2
(22) Date of filing: 20.12.2016
(51) Int. Cl.: F24F 6/14, F24F 11/00, G03B 29/00, G03B 21/608, G03B 21/28

(54) **HUMIDIFIER AND METHOD FOR HUMIDIFYING**
BEFEUCHTER UND VERFAHREN ZUM BEFEUCHTEN
HUMIDIFICATEUR ET MÉTHODE D'HUMIDIFICATION

(43) Date of publication of application: 27.06.2018
(73) Proprietor: Fogio Inc., 45360 Valkeala (FI)
(72) Inventor: Horppu, Mikko, 45360 Valkeala (FI); Laitinen, Markku, 02770 Espoo (FI); Rakkolainen, Ismo, 33710 Tampere (FI); Palovuori, Karri, 36240 Kangasala (FI); Al Take, Muntadar, 20660 Littoinen (FI); Jaatinen, Jyrki, 32250 Kojonkulma (FI)
(74) Representative: Berggren Oy

(56) References cited:
- WO-A2-2012/048219
- US-A- 4 649 710
- US-A1- 2004 001 182
- US-A1- 2011 285 964

## Description

### Technical field

The present invention relates to humidifiers.

### Background

Humidifiers may be used to increase humidity of air e.g. in a building. There are various humidifiers in the market using different techniques, e.g. evaporative humidifiers, ultrasonic humidifiers and steam-based humidifiers.

WO 2012/048219 shows a humidifier with a projection mechanism.

US20040001182 discloses a method and a system for displaying free-space full color, high-resolution video or still images while simultaneously enabling the user to have real-time direct interaction with the visual images.

US4649710 discloses a method of operating an air conditioner for supplying an air from the air conditioner to the inside of a chamber, the temperature of the air supplied to the inside of the chamber upon starting the operation of the air conditioner is increased to an aimed temperature while maintaining the supplier air temperature higher than the temperature at the surfaces of the inner wall of the chamber and/or the equipments installed therein but lower than the temperature the dew point for which is lower than the surface temperature, whereby the moistures contained in the air supplied from the air conditioner is prevented from condensating to form water droplets on the inner wall of the chamber and/or the equipments installed therein.

US20110285964 discloses a display system for use in winter and other low temperature venues. The system includes a projection screen generation assembly that includes a snow making machine. The snow making machine receives an input flow of a liquid, such as water plus one or more additives to increase opacity and/or reflectivity of the snowflakes. The machine forms snow from the input flow and discharges a volume of flowing snow as a sheet or curtain providing a projection screen.

### Summary

An object of the invention is to provide a humidifier and a method for humidifying air.

Humidifiers may be used to increase the humidity of the indoor air. It may be beneficial for a user to know about the operation of the humidifier while the humidifier is used and/or about the humidifier's effect on the ambient air. For example, the user may want to know ambient RH. The user may see the ambient RH displayed on a display screen.

According to an aspect, there is provided a humidifier (500) according to claim 1.

According to an aspect, there is provided a method for humidifying indoor air according to claim 9.

The scope of protection sought for various embodiments of the invention is set out by the independent claims. The embodiments, if any, described in this specification that do not fall under the scope of the independent claims are to be interpreted as examples useful for understanding various embodiments of the invention.

The humidifier may be constructed so that the fog volume FV1 as a display screen does not require space from the housing of the humidifier. The humidifier may be constructed so that the fog volume FV1 as a display screen cannot be damaged by touching the fog volume FV1.

The fog volume (FV1) may be located between a first substantially laminar air flow portion (AF0a) and a second substantially laminar air flow portion (AFOb).

The fog volume (FV1) may have a first flow velocity (v1z0), the first substantially laminar air flow portion (AF0a) may have a second flow velocity (v2az0), and the first flow velocity (v1z0) may be in the range of 75% to 125% of the second flow velocity (v2az0) preferably in the range of 95% to 105%.

The humidifier comprises an input (400) for receiving measurement data from a humidity sensor (HS1); and a control unit (300) configured to generate a digital image (DIMGa) based on the measurement data. The first projector 600 is arranged to project the optical image (IMG1) according to the digital image (DIMGa) to the fog volume (FV1).

The humidifier may comprise an input (400) for receiving humidity data (HD1) indicating ambient room humidity (AH1); and a control unit (300) may be configured to control operation of the humidifier based on the humidity data (HD1).

Said controlling may comprise at least one of switching the fog unit on or off; adjusting the flow velocity of the fog volume by adjusting a rotational speed of a fan generating flow of the fog volume; adjusting the flow velocity of the fog volume by adjusting at least one dimension of the nozzle unit; and adjusting an amplitude of vibration of vibrating element of an ultrasonic nebulizer producing the fog.

The humidifier may comprise a humidity sensor (HS1) arranged to monitor ambient room humidity.

The first projector (600) may be arranged to provide a projector beam (LB1), and the humidifier may comprise at least one reflector (350) for forming a reflected beam (LB2) by reflecting light of the projector beam (LB1) towards the fog volume.

The humidifier may comprise a moisture sensor (180) arranged to detect leaked water (H2O).

The humidifier may comprise at least one laminarizing element for providing the first substantially laminar air flow portion (AF0a).

The fog volume (FV1) may be formed between a first substantially laminar air flow portion (AF0a) and a second substantially laminar air flow portion (AF0b). The flow of the fog volume FV1 may stay laminar between the laminar air flow portions AF0a and AF0b.

The fog volume (FV1) may have a first flow velocity (v1z0), the first substantially laminar air flow portion (AF0a) may have a second flow velocity (v2az0), and wherein the first flow velocity (v1z0) may be in the range of 75% to 125% of the second flow velocity (v2az0) preferably in the range of 95% to 105%.

The method comprises receiving measurement data from a humidity sensor; generating a digital image based on the measurement data; and projecting the optical image according to the digital image to the fog volume.

The method, wherein a humidifier (500) is arranged to form the fog volume (FV1), may further comprise receiving humidity data (HD1) indicating ambient room humidity; and controlling operation of the humidifier (500) based on the humidity data (HD1).

Said controlling may comprise at least one of switching the fog unit on or off; adjusting the flow velocity of the fog volume by adjusting a rotational speed of a fan generating flow of the fog volume; adjusting the flow velocity of the fog volume by adjusting at least one dimension of the nozzle unit; and adjusting an amplitude of vibration of vibrating element of an ultrasonic nebulizer producing the fog.

The method may comprise providing a projector beam; and forming a reflected beam by reflecting light of the projector beam towards the fog volume.

### Brief description of the drawings

In the following examples, the embodiments of the invention will be described in more detail with reference to the appended drawings in which
- Fig. 1a: shows, by way of example, in a three dimensional view, a humidifier arranged to provide a display,
- Fig. 1b, 1c, 1d and 1e: show, by way of example, in a three dimensional view, a display.
- Fig. 2: shows, by way of example, a fog unit for generating fog,
- Fig. 3a: shows, by way of example, in a three dimensional view, a humidifier,
- Fig. 3b: shows, by way of example, in a cross sectional view, a humidifier,
- Fig. 4: shows, by way of example, in a three dimensional view, a humidifier,
- Fig. 5: shows, by way of example, a fog unit comprising a water container,
- Fig. 6a, 6b and 6c: show, by way of example, images projected on the display screen of the humidifier, and
- Fig. 7: shows, by way of example, method steps of a method for projecting an image.
- Fig. 8: shows, by way of example, a humidifier comprising an air purifying system.

The drawings are schematic.

### Detailed description

Relative humidity (RH) is the ratio of the partial pressure of water vapor to the equilibrium vapour pressure of water at a given temperature. Advisable RH is typically in the range of e.g. 20 % to 40 %. When the RH is below 20%, dry air may cause e.g. eye irritation, drying out of nasal passages, nosebleeds or dry cracked skin. If the indoor humidity is too high, e.g. above 45%, condensation may occur on e.g. windows or other cold surfaces or structures which may lead to moisture-related problems such as mould or corrosion.

Humidifiers may be used to increase the humidity of the indoor air. It may be beneficial for a user to know about the operation of the humidifier while the humidifier is used and/or about the humidifier's effect on the ambient air. For example, the user may want to know ambient RH. The user may see the ambient RH displayed on a display screen.

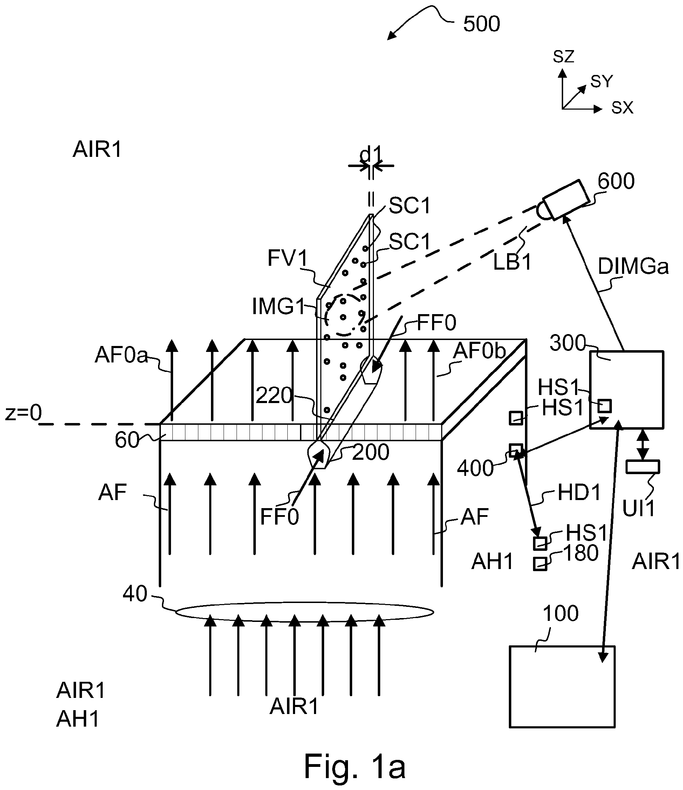

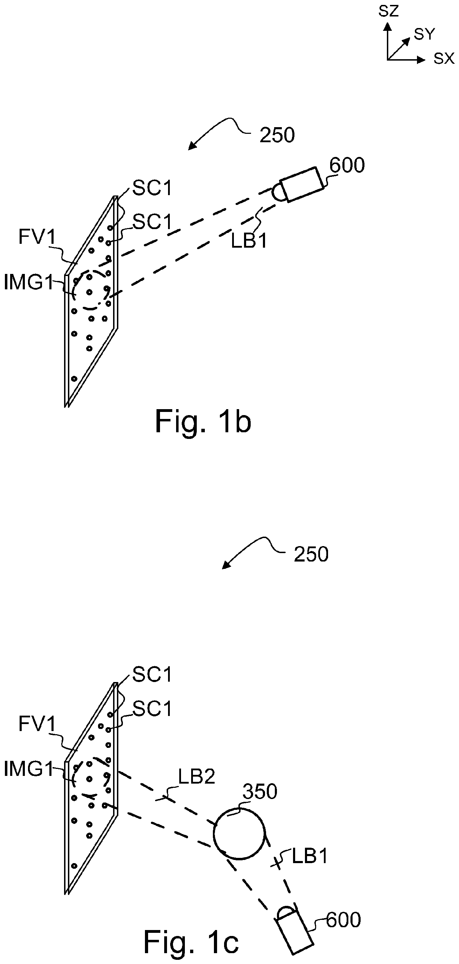

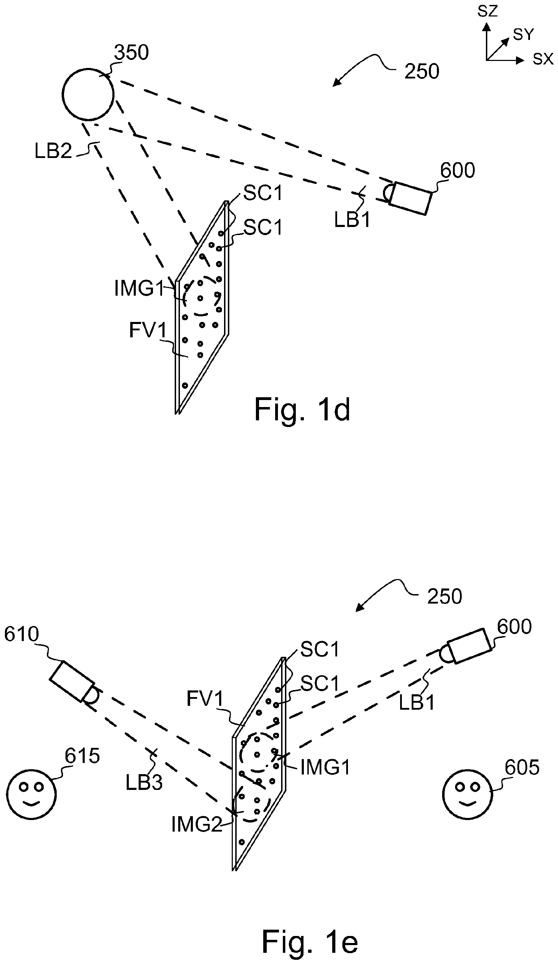

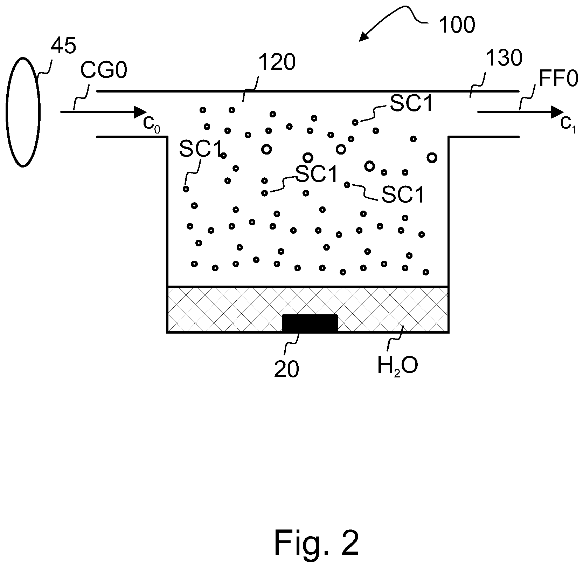

Fig. 1a shows a humidifier 500 arranged to provide a display 250 (see Fig. 1b, 1c, 1d and 1e). The humidifier 500 comprises a fog unit 100 for generating droplets SC1 from water. The fog unit 100 may generate a fog flow FFO as an output. An example of a fog unit is shown in Fig. 2. The humidifier 500 may comprise a nozzle unit 200 for forming a fog volume FV1 from the fog flow FF0. The fog volume FV1 may comprise the droplets, i.e. scattering centers SC1. The droplets may scatter light when a light beam impinges on the droplets. The nozzle unit 200 may comprise e.g. a tubular structure through which a fog flow FFO may be directed from the fog unit 100. The humidifier may be constructed so that the fog volume FV1 as a display screen does not require space from the housing of the humidifier. The humidifier may be constructed so that the fog volume FV1 as a display screen cannot be damaged by touching the fog volume FV1.

The fog volume FV1 may be substantially in a plane defined by directions SY and SZ. The direction SY is perpendicular to the direction SZ. The direction SX is perpendicular to the directions SY and SZ. The fog volume FV1 may flow e.g. to the direction SZ.

The nozzle unit 200 may comprise e.g. a slit 220 for discharging the fog. The nozzle unit 200 may generate the fog volume FV1. The fog flow FFO may flow through the slit 220. The fog volume may be formed of the fog flow FF0. A fan 40 may be used to generate a primary airflow AF. The primary airflow may be laminarized. The humidifier may comprise one or more laminarization elements 60. The laminarization element 60 may be used to provide a substantially laminar airflow AF0 comprising a first substantially laminar air flow portion AF0a and a second substantially laminar air flow portion AF0b from the primary airflow AF. The fog volume FV1 formed of the fog flow FFO may be located between the first substantially laminar air flow portion AF0a and the second substantially laminar air flow portion AF0b. The laminarization element 60 may be used to provide laminarization of the fog flow FFO such that the flow of the fog volume FV1 may be substantially laminar. The laminarization element 60 may be e.g. a honeycomb diffuser. The laminarization element may also attenuate sounds produced by the fans. Since the fog volume FV1 may be located between the first substantially laminar air flow portion AF0a and the second substantially laminar air flow portion AF0b, the flow of the fog volume FV1 may stay laminar.

Fig. 2 shows the fog unit 100 for generating fog from liquid water H₂O, the fog comprising the droplets SC1. The droplets may be generated e.g. using an ultrasonic nebulizer 20 or a pneumatic nebulizer. The humidifier may comprise a fan 45 for generating a carrier gas flow CG0. Concentration c₀ of droplets SC1 in the carrier gas flow CG0 may be approximately zero. The carrier gas flow CG0 may flow through a chamber 120 comprising the water droplets to form the fog flow FF0. c₁ may denote concentration of droplets in the fog flow FF0. The concentration of droplets c₁ may be above zero. The fog flow FFO may be guided to the nozzle unit 200 along e.g. a duct 130.

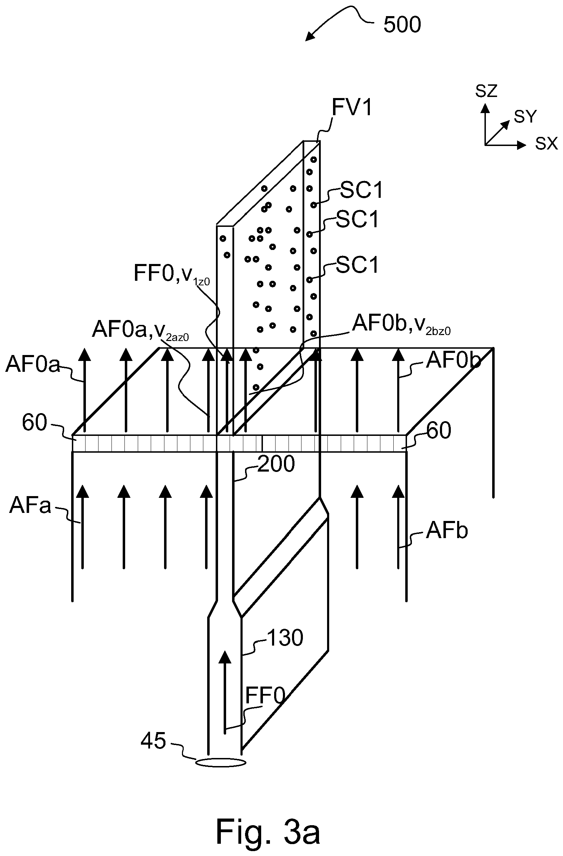

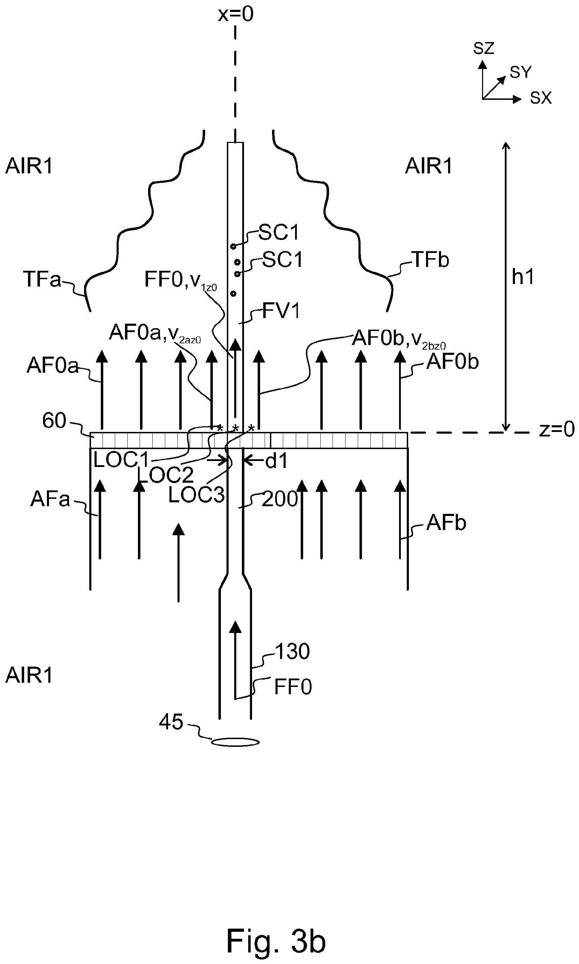

Referring to Fig. 3a and Fig. 3b, the flow of the fog volume FV1 may flow in a substantially same direction, i.e. SZ-direction, as the air flow of the first laminar air flow portion AF0a and the air flow of the second laminar air flow portion AF0b. The fog volume has an initial thickness d1. The thickness may be e.g. in the range of 0.2 cm to 5 cm, preferably in the range of 0.5 cm to 1 cm. The fog volume FV1 may have a first flow velocity v_{1z0}, and the first laminar air flow portion AF0a may have a second flow velocity v_{2az0}. The second laminar air flow portion AF0b may have a third flow velocity v_{2bz0}. Initial flow velocities may be measured in locations LOC1, LOC2 and LOC3 in Fig. 3b. Measurement location LOC2 for the first flow velocity v_{1z0} may be located in the central part of the fog volume FV1, at location where the fog volume FV1 exits the laminarization element 60, i.e. at x=0, at z=0. Measurement location LOC1 for the second flow velocity v_{2az0} may be located e.g. at x=-d1, z=0. Measurement location LOC3 for the third flow velocity v_{2bz0} may be located e.g. at x=d1, z=0. The first flow velocity v_{1z0} may be e.g. in the range of 75% to 125% of the second flow velocity v_{2az0} and of the third flow velocity v_{2bz0}, preferably e.g. in the range of 95% to 105%.

The fog volume FV1 may have a height h1. The height h1 may be e.g. in the range of 10 to 100 cm. The velocity v_{1z0} may stay substantially constant in SZ-direction to the height h1. The fog flow FF0 inside the fog volume FV1 may become a turbulent flow above the height h1. Turbulence may be present at a boundary TFa of the first laminar air flow portion AF0a and at a boundary TFb of the second laminar air flow portion AF0b.

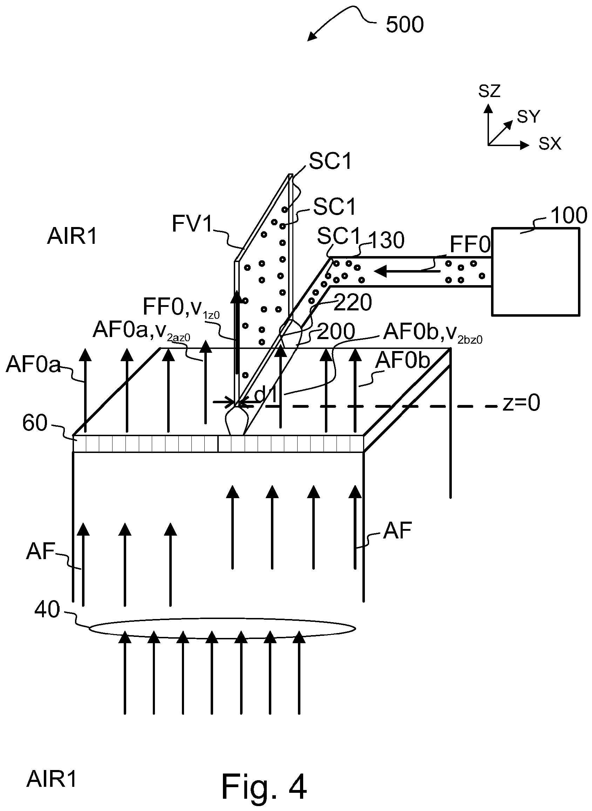

Referring to Fig. 4, the fog flow FFO may flow from the fog unit 100 to the nozzle unit 200 along the duct 130. The nozzle unit 200 may form the fog volume FV1 from the fog flow FF0. The fog volume FV1 may be formed when the fog flow FF0 flows through the slit 220. The fog volume has an initial thickness d1.

Referring back to Fig. 1a, the humidifier 500 may comprise an input 400 e.g. for receiving humidity data HD1 indicating ambient room humidity AH1, i.e. humidity of ambient air AIR1. The humidifier may comprise a control unit 300 configured to control operation of the humidifier based on the humidity data. The control unit 300 may comprise or may be connected to a user interface U11. The user interface UI1 may receive user input for controlling the humidifier. The user interface UI1 may receive user input through a touch screen and/or a keypad. Alternatively or in addition, the user interface UI1 may receive user input from internet or smartphone via a communication connection. For example, the user may set one or more operational value, such as a target value for RH or a target value for air flow rate, using the user interface UI1. The control unit 300 may receive the humidity data from the input 400 which may be connected to the control unit 300. Alternatively or in addition, the control unit 300 may receive the humidity data from a humidity sensor HS1. The humidifier may comprise the humidity sensor HS1, or it may be a remote sensor which may be located at a distance from the humidifier, e.g. at 2m from the humidifier. The humidity sensor HS1 may be arranged to monitor ambient room humidity AH1. The humidity sensor may be e.g. a capacitive humidity sensor or resistive humidity sensor.

The control unit 300 may control operation of the humidifier. Controlling operation of the humidifier may comprise e.g. switching the fog unit on or off based on the humidity data. For example, the control unit may be configured to switch the fog unit off if the humidity data indicates that the relative humidity is above a predetermined value. The control unit may be configured to switch the fog unit on, if the humidity data indicates that the relative humidity is below a predetermined value.

Controlling of the humidifier may comprise e.g. controlling the ultrasonic nebulizer 20 and/or the fan motors producing the fog flow FF0. The control unit may be configured to adjust the flow velocity of the fog volume. The flow velocity of the fog volume may be adjusted e.g. by adjusting a rotational speed of a fan or adjusting at least one dimension of the nozzle unit, e.g. a width of the slit 220. Controlling of the ultrasonic nebulizer may comprise e.g. adjusting an amplitude of vibration of vibrating element of the ultrasonic nebulizer. Alternatively or in addition, the ultrasonic nebulizer may be controlled using duty cycle control. For example, the current may be provided to the vibrating element of the nebulizer using pulse-width modulation technique. A duty cycle is a time period in which the ultrasonic nebulizer is active, i.e. is producing the fog. The duty cycle may be expressed as a percentage. A period is the time it takes for a signal to complete an on-and-off cycle. For example, a 60% duty cycle means that the ultrasonic nebulizer is active 60% of the period and inactive 40% of the period.

Referring to Fig. 1a, the humidifier 500 comprises a first projector 600 for projecting an optical image IMG1 to the fog volume FV1. The slit 220 may have a thickness d1. The fog volume has an initial thickness d1 at z=0. The thickness may be in the range of 0.2 cm to 5 cm, preferably in the range of 0.5 cm to 1 cm.

Fig. 1b shows, by way of example, a display 250. The first projector 600 may be arranged to provide a projector beam LB1 directed to the fog volume FV1. The optical image IMG1 may be formed when the projector beam LB1 impinges on the droplets SC1. Light source of the first projector may be e.g. a lamp, LED(s) or a laser, or a LED/laser-combined light source.

Fig. 1c and 1d show, by way of example, a display 250. The first projector 600 may be arranged to provide a primary projector beam LB1 directed, at least partly, to a reflector 350. The reflector may be e.g. a mirror or a prism. The reflector 350 may be attached to the humidifier. The reflector 350 may form a reflected projector beam LB2 by reflecting light of the projector beam LB1 towards the fog volume. The optical image IMG1 may be formed when the reflected beam LB2 impinges on the droplets SC1. Installation of the projector at a suitable distance for projecting the images on the FV1 may sometimes be cumbersome. One or more reflectors 350 may be used for reflecting the projector beams and/or reflected beams to enable assembly of the humidifier in a way that the humidifier may be more compact.

One or more images may be formed on both sides of a planar fog volume FV1. A first optical image IMG1 may be projected on a first side of the fog volume FV1. A second optical image IMG2 may be projected on a second side of the fog volume FV1.

Fig. 1e shows, by way of example, a display 250. In addition to the first projector 600, the humidifier may comprise a second projector 610. The second projector 610 may be arranged to provide a second projector beam LB3 directed to the fog volume FV1. Light source of the second projector may be e.g. a lamp, LED(s) or a laser, or a LED/laser-combined light source. A second optical image IMG2 may be formed when the projector beam LB3 impinges on the droplets SC1. A first person 605 may view the first optical image IMG1. Maximum brightness of the first optical image IMG1 may be substantially higher than the maximum brightness of the second optical image IMG2 when viewed from the location of the first person 605. A second person 615 may view the second optical image IMG2. Maximum brightness of the second optical image IMG2 may be substantially higher than the maximum brightness of the first optical image IMG1 when viewed from the location of the second person 615. The images IMG1, IMG2 may be projected on the fog volume FV1 such that the first person 605 does not see clearly from his location the second optical image IMG2 formed on the second side of the fog volume FV1. The images IMG1, IMG2 may be projected on the fog volume FV1 such that the second person 615 does not see clearly from his location the first optical image IMG1 formed on the first side of the fog volume FV1.

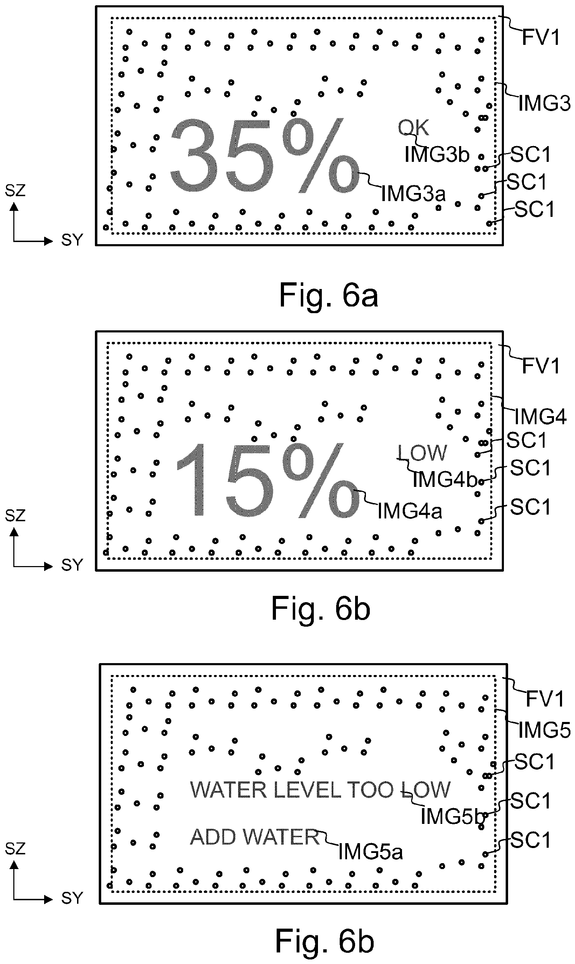

The display screen area may be doubled when projecting images on both sides of the fog volume FV1. The display screen area may be doubled when compared to a situation when image(s) are projected only on one side of the fog volume FV1. IMG1 may be different image than IMG2. IMG1 and IMG2 may be projected simultaneously on the different sides of the fog volume FV1. Using the fog volume FV1 as a display screen may enable a user, e.g. the first person 605, to view the first optical image IMG1, showing e.g. a nice holiday image, on one side of the fog volume FV1 and the second optical image IMG2, being indicative of e.g. one or more operational parameters of the humidifier, on another side of the fog volume FV1. (See Fig. 6a, 6b and 6c.)

The humidifier may comprise an array of projectors for projecting images onto the fog volume FV1.

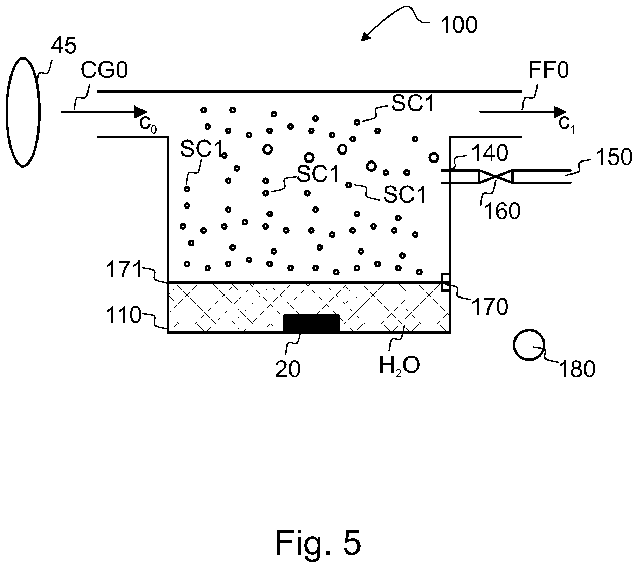

Referring to Fig. 5, the humidifier may comprise a water container 110 for storing water. The fog unit 100 may comprise the water container 110. The water container may comprise an inlet 140. The inlet 140 may be connectable to a water pipe 150. The water pipe 150 may be used to convey water from a water reservoir or from a water supply network to the water container 110. The humidifier may comprise a valve 160. The valve 160 may be controlled e.g. by a control unit. Water level 171 may be measured using a level sensor 170. The level sensor may use e.g. optical, capacitive, ultrasonic, magnetostrictive or pressure-based technique. The level sensor 170 may produce water level data. The control unit may receive the water level data from the level sensor. When the humidifier is on, the water level 171 decreases. When the measured water level reaches a value below a predetermined threshold value, the control unit may be configured to open the valve 160 to let the water in the water pipe 150 flow into the reservoir. When the measured water level 171 reaches a predetermined value, the control unit may be configured to close the valve 160 to stop the water flow into the reservoir. Alternatively, control unit may be configured to adjust the valve to be partly open in order to keep the water level in a preferred range wherein there may be a balance between the evaporation of the water and inflow of the water.

Alternatively or in addition, the water container may be filled manually, e.g. using a can.

The water container may comprise e.g. silver ions in water for preventing bacterial growth in water. Alternatively or in addition, internal surface of the water container may be coated with a coating. The coating may comprise e.g. silver ions for preventing bacterial growth.

The reservoir may sometimes leak e.g. because of a crack or a torn seal. The control unit may be configured to detect leakage of the reservoir based on the water level data. For example, if the water level decreases faster than normally, it may be determined that the water container may have a leakage. A rate of change of the water level exceeding a predetermined threshold value may indicate leakage.

The humidifier may comprise a moisture sensor 180 arranged to detect water. The moisture sensor 180 may be located outside of the reservoir. The control unit may be configured to detect leakage based on moisture data received from the moisture sensor.

The humidifier may comprise a noise-cancellation system arranged to reduce unwanted sound(s). The unwanted sound may be originated e.g. from the fans 40. The humidifier may comprise one or more loudspeakers to produce sound to mask unwanted sound originated from the fans.

Fig. 6a, 6b and 6c show, byway of examples, images projected on the display screen of the humidifier. Optical images IMG3, IMG4, IMG5 may be projected to the fog volume FV1. The optical images IMG3, IMG4, IMG5 may comprise e.g. one or more sub-images IMG3a, IMG3b, IMG4a, IMG4b, IMG5a, IMG5b. The sub-images may be indicative of e.g. time, date, weather and/or one or more operational parameters of the humidifier, such as a target value for RH. The sub-images may be indicative of one or more measurement data relating to the operation of the humidifier. For example, the sub-image IMG3a may indicate ambient relative humidity, e.g. 35% in Fig. 6a. The sub-image IMG3b may indicate whether the ambient relative humidity is e.g. OK, too low or too high. For example, in Fig. 6b, the sub-image IMG4a may indicate that the ambient relative humidity is 15%. The sub-image IMG4b may indicate that the ambient relative humidity is low. The sub-image IMG5b in Fig. 6c may indicate that the water level is too low. The sub-image IMG5a may indicate to the user that water should be added to the water container.

The control unit may be configured to receive measurement data from e.g. humidity sensor, moisture sensor and/or water sensor. The measurement data may comprise humidity data, moisture data and/or water level data. The control unit may be configured to control operation of the projector based on the measurement data.

The humidifier comprises the input 400 for receiving measurement data from the humidity sensor HS1. In addition, the humidifier may comprise the input 400 for receiving measurement data from e.g. the moisture sensor or the water sensor. The control unit 300 is configured to generate a digital image DIMGa based on the measurement data. The first projector 600 may be configured to receive the digital image DIMGa from the control unit 300 e.g. via a communication connection. The communication connection may be e.g. a Bluetooth connection or a WiFi connection. The first projector 600 may be arranged to project the optical image IMG1 according to the digital image DIMGa to the fog volume FV1. The display may be arranged to convert the digital image DIMGa to the optical image IMG1.

In addition, the images IMG3, IMG4, IMG5 may be any images or videos projected to the fog volume FV1. The humidifier may receive images to be projected e.g. from Internet, from a smartphone, from a tablet, or external memory via e.g. a WiFi connection or a Bluetooth connection. The humidifier may comprise a memory for storing images.

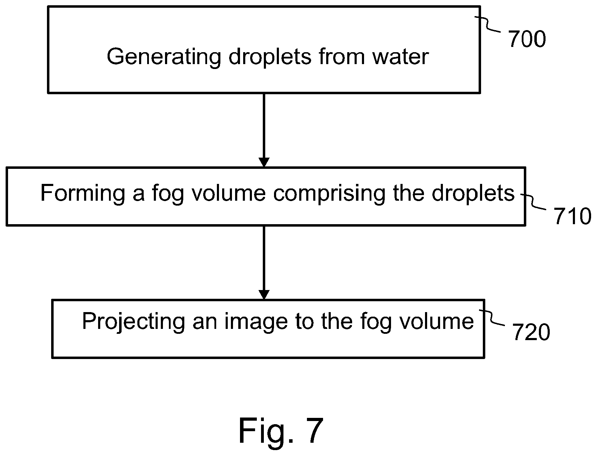

Fig. 7 shows method steps of a method for projecting an image. The method comprises generating (700) droplets (SC1) from water (H2O), forming (710) a fog volume (FV1) comprising the droplets, and projecting (720) an image (IMG1) to the fog volume.

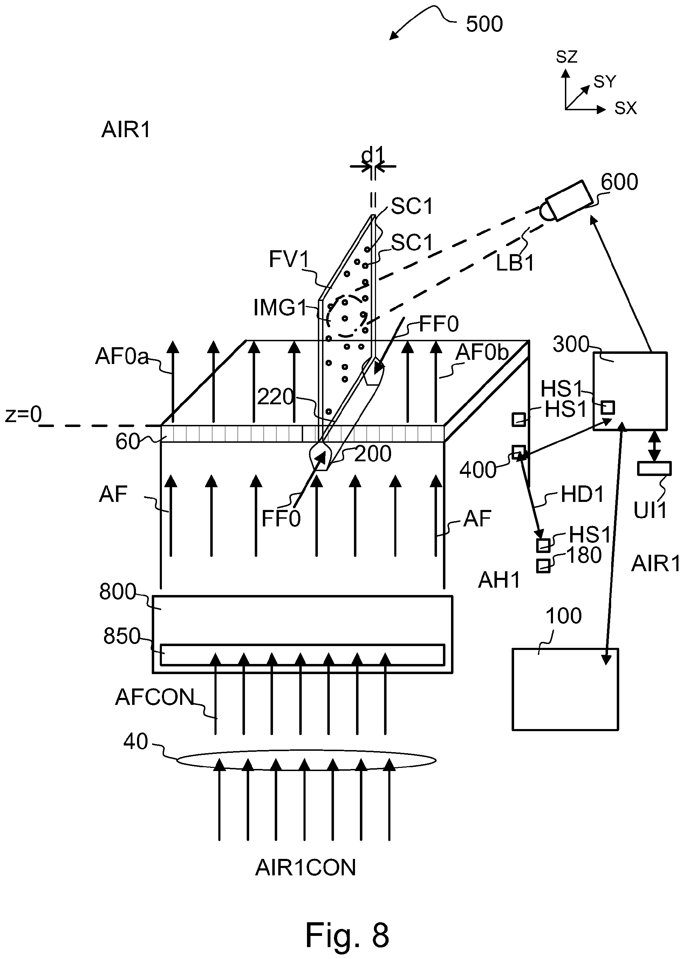

Referring to Fig. 8, the humidifier 500 may comprise an air purifying system 800. The air purifying system may remove contaminants from the contaminated air AIR1CON. The air purifying system 800 may take the contaminated air AIR1CON in as an input. The air purifying system may comprise a filter 850, e.g. a high efficiency particulate air (HEPA) filter and/or activated carbon filter. Alternatively or in addition, the air purifying system 800 may comprise e.g. an electrostatic filter. A primary airflow comprising contaminants AFCON may be generated from the contaminated air AIR1 CON using the fan 40. The primary airflow comprising contaminants AFCON may be purified with the air purifying system 800. The primary airflow comprising contaminants AFCON may flow through e.g. the HEPA filter 850 which may capture contaminants from the primary airflow AFCON. The air purifying system 800 may provide the primary airflow AF without contaminants as an output. Since the humidifier may comprise fans and the air is circulated through the humidifier with high flow rate, it may be beneficial for a user that the humidifier comprises the air purifying system, and the user need not to have a separate device for purifying air. The filter may attenuate the sound produced by the fans.

The humidifier may comprise a heating element. The humidifier may be used to warm up the air circulating through the humidifier using the heating element.

The humidifier may comprise means for cooling the air circulating through the humidifier.

For the person skilled in the art, it will be clear that modifications and variations of the devices according to the present invention are perceivable. The particular embodiments described above with reference to the accompanying drawings are illustrative. The scope of the invention is defined by the appended claims.

## Claims

1. A humidifier (500) for humidifying indoor air, comprising:
a fog unit (100) for generating droplets (SC1) from water (H2O);
a nozzle unit (200) for forming a fog volume (FV1) comprising the droplets (SC1);
a first projector (600) for projecting an optical image (IMG1) to the fog volume (FV1);
an input (400) for receiving measurement data (HD1) from a humidity sensor (HS1); and
a control unit (300) configured to generate a digital image (DIMGa) based on the measurement data (HD1), wherein the first projector (600) is arranged to project the optical image (IMG1) according to the digital image (DIMGa) to the fog volume (FV1).

2. The humidifier according to the claim 1, further comprising one or more laminarization elements (60) for providing a substantially laminar airflow (AF0) comprising a first substantially laminar airflow (AF0a) and a second substantially laminar airflow (AF0b), wherein the fog volume (FV1) is located between a first substantially laminar air flow portion (AF0a) and a second substantially laminar air flow portion (AF0b).

3. The humidifier according to the claim 1 or 2, wherein the fog volume (FV1) has a first flow velocity (v_{1z0}), the first substantially laminar air flow portion (AF0a) has a second flow velocity (v_{2az0}), and wherein the first flow velocity (v_{1z0}) is in the range of 75% to 125% of the second flow velocity (v_{2az0}), preferably in the range of 95% to 105%.

4. The humidifier according to any of the claims 1 to 3, wherein the measurement data (HD1) is indicative of ambient room humidity (AH1), and wherein the control unit (300) is further configured to control operation of the humidifier based on the humidity data (HD1).

5. The humidifier according to the claim 4, wherein said controlling comprises at least one of
switching the fog unit (100) on or off;
adjusting the flow velocity (v_{1z0}) of the fog volume (FV1) by adjusting a rotational speed of a fan (40) generating a flow of the fog volume (FV1);
adjusting the flow velocity (v_{1z0}) of the fog volume (FV1) by adjusting at least one dimension of the nozzle unit (200); and
adjusting an amplitude of vibration of vibrating element of an ultrasonic nebulizer (20) producing the fog.

6. The humidifier according to any of the claims 1 to 5, wherein the first projector (600) is arranged to provide a projector beam (LB1), and the humidifier further comprises at least one reflector (350) for forming a reflected beam (LB2) by reflecting light of the projector beam (LB1) towards the fog volume (FV1).

7. The humidifier according to any of the claims 1 to 6, further comprising a moisture sensor (180) arranged to detect leaked water (H2O).

8. The humidifier according to claim 2 or any of claims 3 to 7, when dependent on claim 2, further comprising at least one laminarizing element (60) for providing the first substantially laminar air flow portion (AF0a).

9. A method for humidifying indoor air (AIR1), comprising:
generating droplets (SC1) from water (H2O);
forming a fog volume (FV1) comprising the droplets (SC1);
receiving measurement data from a humidity sensor (HS1);
generating a digital image (DIMGa) based on the measurement data; and
projecting an optical image (IMG1) according to the digital image (DIMGa) to the fog volume (FV1).

10. The method according to claim 9, wherein the fog volume (FV1) is formed between a first substantially laminar air flow portion (AF0a) and a second substantially laminar air flow portion (AFOb).

11. The method according to claim 9 or 10, the fog volume (FV1) having a first flow velocity (v_{1z0}), the first substantially laminar air flow portion (AF0a) has a second flow velocity (v_{2az0}), and wherein the first flow velocity (v_{1z0}) is in the range of 75% to 125% of the second flow velocity (v_{2az0}), preferably in the range of 95% to 105%.

12. The method according to any of the claims 9 to 11, wherein a humidifier (500) is arranged to form the fog volume (FV1), the method further comprises receiving humidity data (HD1) indicating ambient room humidity; and controlling operation of the humidifier (500) based on the humidity data (HD1).

13. The method according to any of the claims 9 to 12, further comprising:
providing a projector beam (LB1); and
forming a reflected beam (LB2) by reflecting light of the projector beam towards the fog volume (FV1).

## Patentansprüche

1. Befeuchter (500) zum Befeuchten von Raumluft, umfassend:
eine Nebeleinheit (100) zum Erzeugen von Tröpfchen (SC1) aus Wasser (H2O);
eine Düseneinheit (200) zum Ausbilden eines Nebelvolumens (FV1), das die Tröpfchen (SC1) umfasst;
einen ersten Projektor (600) zum Projizieren eines optischen Bildes (IMG1) auf ein Nebelvolumen (FV1);
einen Eingang (400) zum Empfangen von Messdaten (HD1) von einem Feuchtigkeitssensor (HS1); und
eine Steuereinheit (300), die dazu konfiguriert ist, ein digitales Bild (DIMGa) basierend auf den Messdaten (HD1) zu erzeugen, wobei der erste Projektor (600) dazu angeordnet ist, das optische Bild (IMG1) gemäß dem digitalen Bild (DIMGa) auf das Nebelvolumen (FV1) zu projizieren.

2. Befeuchter nach Anspruch 1, der außerdem ein oder mehrere Laminarisierungselemente (60) zum Bereitstellen einer im Wesentlichen laminaren Luftströmung (AF0) umfasst, die einen ersten im Wesentlichen laminaren Luftstrom (AF0a) und einen zweiten im Wesentlichen laminaren Luftstrom (AF0b) umfasst, wobei sich das Nebelvolumen (FV1) zwischen einem ersten im Wesentlichen laminaren Luftstromteil (AF0a) und einem zweiten im Wesentlichen laminaren Luftstromteil (AF0b) befindet.

3. Befeuchter nach Anspruch 1 oder 2, wobei das Nebelvolumen (FV1) eine erste Strömungsgeschwindigkeit (v_{1z0}) aufweist, der erste im Wesentlichen laminare Luftstromteil (AF0a) eine zweite Strömungsgeschwindigkeit (v_{2az0}) aufweist, und wobei die erste Strömungsgeschwindigkeit (v_{1z0}) im Bereich von 75 % bis 125 % der zweiten Strömungsgeschwindigkeit (v_{2az0}), vorzugsweise im Bereich von 95 % bis 105 %, liegt.

4. Befeuchter nach einem der Ansprüche 1 bis 3, wobei die Messdaten (HD1) für die Umgebungs-Raumfeuchtigkeit (AH1) bezeichnend sind, und wobei die Steuereinheit (300) außerdem dazu konfiguriert ist, den Betrieb des Befeuchters basierend auf den Feuchtigkeitsdaten (HD1) zu steuern.

5. Befeuchter nach Anspruch 4, wobei das Steuern mindestens eines von Folgendem umfasst:
Ein- oder Ausschalten der Nebeleinheit (100);
Anpassen der Strömungsgeschwindigkeit (v_{1z0}) des Nebelvolumens (FV1) durch Einstellen der Drehzahl eines Ventilators (40), der eine Strömung des Nebelvolumens (FV1) erzeugt;
Anpassen der Strömungsgeschwindigkeit (v_{1z0}) des Nebelvolumens (FV1) durch Einstellen von mindestens einer Abmessung der Düseneinheit (200); und
Einstellen einer Schwingungsamplitude eines schwingenden Elements eines Ultraschallverneblers (20), der den Nebel erzeugt.

6. Befeuchter nach einem der Ansprüche 1 bis 5, wobei der erste Projektor (600) dazu angeordnet ist, einen Projektionsstrahl (LB1) bereitzustellen, und der Befeuchter außerdem mindestens einen Reflektor (350) umfasst, um einen reflektierten Strahl (LB2) zu bilden, indem Licht des Projektionsstrahls (LB1) zum Nebelvolumen (FV1) hin reflektiert wird.

7. Befeuchter nach einem der Ansprüche 1 bis 6, der außerdem einen Feuchtigkeitssensor (180) umfasst, der dazu angeordnet ist, Leckwasser (H2O) zu detektieren.

8. Befeuchter nach Anspruch 2 oder einem der Ansprüche 3 bis 7, falls abhängig von Anspruch 2, der außerdem mindestens ein Laminarisierungselement (60) zum Bereitstellen des ersten im Wesentlichen laminaren Luftstromteils (AF0a) umfasst.

9. Verfahren zum Befeuchten von Raumluft (AIR1), umfassend:
Erzeugen von Tröpfchen (SC1) aus Wasser (H2O);
Ausbilden eines Nebelvolumens (FV1), das die Tröpfchen (SC1) umfasst;
Empfangen von Messdaten von einem Feuchtigkeitssensor (HS1);
Erzeugen eines digitalen Bildes (DIMGa) basierend auf den Messdaten; und
Projizieren eines optischen Bildes (IMG1) gemäß dem digitalen Bild (DIMGa) auf das Nebelvolumen (FV1).

10. Verfahren nach Anspruch 9, wobei das Nebelvolumen (FV1) zwischen einem ersten im Wesentlichen laminaren Luftstromteil (AF0a) und einem zweiten im Wesentlichen laminaren Luftstromteil (AF0b) ausgebildet wird.

11. Verfahren nach Anspruch 9 oder 10, wobei das Nebelvolumen (FV1) eine erste Strömungsgeschwindigkeit (v_{1z0}) aufweist, der erste im Wesentlichen laminare Luftstromteil (AF0a) eine zweite Strömungsgeschwindigkeit (v_{2az0}) aufweist, und wobei die erste Strömungsgeschwindigkeit (v_{1z0}) im Bereich von 75 % bis 125 % der zweiten Strömungsgeschwindigkeit (v_{2az0}), vorzugsweise im Bereich von 95 % bis 105 %, liegt.

12. Verfahren nach einem der Ansprüche 9 bis 11, wobei ein Befeuchter (500) dazu angeordnet ist, ein Nebelvolumen (FV1) auszubilden, und das Verfahren außerdem Folgendes umfasst:
das Empfangen von Feuchtigkeitsdaten (HD1), die die Umgebungs-Raumfeuchtigkeit angeben; und
das Steuern des Betriebs des Befeuchters (500) basierend auf den Feuchtigkeitsdaten (HD1).

13. Verfahren nach einem der Ansprüche 9 bis 12, das außerdem Folgendes umfasst:
Bereitstellen eines Projektionsstrahls (LB1); und
Bilden eines reflektierten Strahls (LB2), indem Licht des Projektionsstrahls zum Nebelvolumen (FV1) hin reflektiert wird.

## Revendications

1. Humidificateur (500) pour humidifier de l'air intérieur, comprenant :
une unité de brumisation (100) pour générer des gouttelettes (SC1) d'eau (H2O),
une unité de buse (200) pour former un volume de brumisation (FV1) comprenant les gouttelettes (SC1),
un premier projecteur (600) pour projeter une image optique (IMG1) vers le volume de brumisation (FV1),
une entrée (400) pour recevoir des données de mesure (HD1) à partir d'un capteur d'humidité (HS1), et
une unité de commande (300) configurée pour générer une image numérique (DIMGa) sur la base des données de mesure (HD1), dans lequel le premier projecteur (600) est agencé pour projeter l'image optique (IMG1) conformément à l'image numérique (DIMGa) vers le volume de brumisation (FV1).

2. Humidificateur selon la revendication 1, comprenant en outre un ou plusieurs éléments de laminarisation (60) pour fournir un flux d'air sensiblement laminaire (AF0) comprenant un premier flux d'air sensiblement laminaire (AF0a) et un second flux d'air sensiblement laminaire (AF0b),
dans lequel le volume de brumisation (FV1) est situé entre une première partie de flux d'air sensiblement laminaire (AF0a) et une seconde partie de flux d'air sensiblement laminaire (AF0b).

3. Humidificateur selon la revendication 1 ou 2, dans lequel le volume de brumisation (FV1) a une première vitesse d'écoulement (V_{1z0}), la première partie de flux d'air sensiblement laminaire (AF0a) a une seconde vitesse d'écoulement (V_{2az0}), et dans lequel la première vitesse d'écoulement (V_{1z0}) est de 75 % à 125 % de la seconde vitesse d'écoulement (V_{2az0}), de préférence de 95 % à 105 %.

4. Humidificateur selon l'une quelconque des revendications 1 à 3, dans lequel les données de mesure (HD1) sont indicatives de l'humidité ambiante de la pièce (AH1), et dans lequel l'unité de commande (300) est configurée en outre pour commander le fonctionnement de l'humidificateur sur la base des données d'humidité (HD1).

5. Humidificateur selon la revendication 4, dans lequel ladite commande comprend au moins une des actions suivantes :
mise en marche ou arrêt de l'unité de brumisation (100),
réglage de la vitesse d'écoulement (V_{1z0}) du volume de brumisation (FV1) en réglant une vitesse de rotation d'un ventilateur (40) produisant un écoulement du volume de brumisation (FV1),
réglage de la vitesse d'écoulement (V_{1z0}) du volume de brumisation (FV1) en réglant au moins une dimension de l'unité de buse (200), et
réglage d'une amplitude de vibration d'élément vibrant d'un nébuliseur à ultrasons (20) produisant la brumisation.

6. Humidificateur selon l'une quelconque des revendications 1 à 5, dans lequel le premier projecteur (600) est agencé pour fournir un faisceau de projecteur (LB1), et l'humidificateur comprend en outre au moins un réflecteur (350) pour former un faisceau réfléchi (LB2) en réfléchissant de la lumière du faisceau de projecteur (LB1) vers le volume de brumisation (FV1).

7. Humidificateur selon l'une quelconque des revendications 1 à 6, comprenant en outre un capteur d'humidité (180) agencé pour détecter une fuite d'eau (H2O).

8. Humidificateur selon la revendication 2 ou l'une quelconque des revendications 3 à 7 lorsqu'elle dépend de la revendication 2, comprenant en outre un élément de laminarisation (60) pour fournir la première partie de flux d'air sensiblement laminaire (AF0a).

9. Procédé pour humidifier de l'air intérieur (AIR1), comprenant :
la génération de gouttelettes (SC1) d'eau (H2O),
la formation d'un volume de brumisation (FV1) comprenant les gouttelettes (SC1),
la réception de données de mesure depuis un capteur d'humidité (HS1),
la génération d'une image numérique (DIMGa) sur la base des données de mesure, et
la projection d'une image optique (IMG1) conformément à l'image numérique (DIMGa) vers le volume de brumisation (FV1).

10. Procédé selon la revendication 9, dans lequel le volume de brumisation (FV1) est formé entre une première partie de flux d'air sensiblement laminaire (AF0a) et une seconde partie de flux d'air sensiblement laminaire (AF0b).

11. Procédé selon la revendication 9 ou 10, dans lequel le volume de brumisation (FV1) a une première vitesse d'écoulement (V_{1z0}), la première partie de flux d'air sensiblement laminaire (AF0a) a une seconde vitesse d'écoulement (V_{2az0}), et dans lequel la première vitesse d'écoulement (V_{1z0}) est de 75 % à 125 % de la seconde vitesse d'écoulement (V_{2az0}), de préférence de 95 % à 105 %.

12. Procédé selon l'une quelconque des revendications 9 à 11, dans lequel un humidificateur (500) est configuré pour former le volume de brumisation (FV1),
le procédé comprenant en outre la réception de données d'humidité (HD1) indiquant l'humidité ambiante de la pièce, et
la commande du fonctionnement de l'humidificateur (500) sur la base des données d'humidité (HD1).

13. Procédé selon l'une quelconque des revendications 9 à 12, comprenant en outre :
la fourniture d'un faisceau de projecteur (LB1), et
la formation d'un faisceau réfléchi (LB2) en réfléchissant de la lumière du faisceau de projecteur vers le volume de brumisation (FV1).
